# EUROPEAN PATENT SPECIFICATION

(11) **EP 1 532 869 B1**
(45) Date of publication and mention of the grant of the patent: **20.02.2008**
(21) Application number: 03736223.3
(22) Date of filing: 17.06.2003
(51) Int. Cl.: A23L 2/52, A23L 1/03, A23L 2/00, A23L 2/38

(54) **FOAM-HOLDING AGENTS AND USE THEREOF**
SCHAUMHALTEMITTEL UND VERWENDUNG DAVON
AGENTS DE TENUE DE MOUSSE ET LEUR UTILISATION

(30) Priority: 17.06.2002 JP 2002176489
(43) Date of publication of application: 25.05.2005
(73) Proprietor: SUNTORY LIMITED, Osaka-shi, Osaka 530-8203 (JP)
(72) Inventor: WATANABE, Tokutomi, Fuchu-shi, Tokyo 183-0025 (JP); DAIDO, Hiromi, Kawasaki-shi, Kanagawa 216-0007 (JP); YOSHIHIRO, Akira, Yokohama-shi, Kanagawa 223-0053 (JP)
(74) Representative: Vossius & Partner
(86) International application number: PCT/JP2003/007652
(87) International publication number: WO 2003/105610

(56) References cited:
- WO-A-94/28736
- JP-A- 1 256 345
- JP-A- 2000 060 507
- JP-B1- 37 015 849
- PATENT ABSTRACTS OF JAPAN vol. 013, no. 293 (C-615), 6 July 1989 (1989-07-06) & JP 01 086832 A (AJINOMOTO GENERAL FOODS KK), 31 March 1989 (1989-03-31)
- DATABASE FSTA INTERNATIONAL FOOD INFORMATION SERVICE (IFIS), FRANkFURT-MAIN, DE; J. Jap. Soc. Food Sci. Technol. 1999; 46:842 1999, MAEDA A, HIBI Y, HAYAKAWA F: "The effect of chemical compounds contained in tea leaves on the foamability of matcha" XP002334516 Database accession no. 2000-00-h1308
- DATABASE WPI Week 1999 Derwent Publications Ltd., London, GB; AN 2000-329670 XP002335496 LIU D: "Cocktail tea - is prepared from tea, wine, white liquor, fruit juice, coloring and thickening agents, vitamin C, carbon dioxide, etc..." & CN 1 237 624 A (LIU D) 8 December 1999 (1999-12-08)
- PATENT ABSTRACTS OF JAPAN vol. 2000, no. 07, 29 September 2000 (2000-09-29) & JP 2000 119431 A (KYODO KUMIAI BUSINESS CLUB), 25 April 2000 (2000-04-25)
- DATABASE WPI Week 2003 Derwent Publications Ltd., London, GB; AN 2003-253727 XP002335497 JANG HD; KIM YC: "Production process of instant tea with foaming agent used" & KR 2002 050 581 A (JANG HD; KIM YC) 27 June 2002 (2002-06-27)
- PATENT ABSTRACTS OF JAPAN vol. 2003, no. 12, 5 December 2003 (2003-12-05) & JP 2003 304844 A (KIRIN BEVERAGE CORP; TOKYO FOOD TECHNO KK), 28 October 2003 (2003-10-28)

## Description

The present invention relates to foam-holding agents available for use in drinks. The present invention also relates to carbon dioxide-containing drinks having foam-producing and foam-holding properties. The present invention further relates to carbon dioxide-containing drinks having a beer-like effervescence without using a fermented grain liquor as a source material.

Fermented grain liquors are alcoholic drinks produced by saccharification and yeast fermentation of grain-derived starch. Carbon dioxide-containing fermented grain liquors (e.g., beers, sparkling liquors) will generate foam to prevent the escape of carbon dioxide from the liquors when poured into glasses or the like before being drunk, thereby maintaining refreshing qualities of the drinks. Such foam is also effective in retaining sensory components (taste and aroma). Moreover, dense and smooth-textured foam will prevent the oxidation of contents and maintain the freshness of drinks.

On the other hand, there have also been proposed effervescent drinks or forming beverage employ a foaming agent as an ingredient acting to improve effervescences and further employ a foam-holding agent as an ingredient acting to ensure long-term holding of the generated foam.

Known examples of such drinks include effervescent mixed liquors which contain a saponin component (JP61-88869 A); effervescent drinks or forming beverage which contain saponin or a saponin-containing preparation and a thickener (e.g., oligosaccharides such as linear maltose oligosaccharides or branched isomaltose oligosaccharides, or a combination of oligosaccharides and polysaccharides) (JP 5-38275 A); carbon dioxide-containing alcoholic drinks which contain a hop-containing fermented malt liquid, a foaming agent, and a foam-holding agent serving as a viscosity stabilizer (e.g., agar, gelatin, xanthan gum, carragheenan, pectin, tamarind gum, gellan gum, Locust bean gum) (JP 11-299473 A); and carbon dioxide-containing alcoholic drinks which contain a hop-containing fermented grain liquid and a foaming agent, either alone or in combination with a foam-holding agent serving as as viscosity stabilizer (JP 2001-103954 A).

However, these drinks do not have a sufficient foam-holding property and are not satisfactory with regard to safety, aroma and other properties required for foods.

The presence of compounds susceptible to modulate the foaming capacity of matcha green tea has been reported by Maeda A. et al, Journal of the Japanese society for Food Science and Technology 1999, 46 (12): 842-845.

As a result of extensive and intensive efforts made to provide effervescent drinks or forming beverage which have a sufficient foam-holding property and are satisfactory with regard to safety, aroma and other properties required for foods, the inventors of the present invention have surprisingly found that, when using a water and/or ethanol extract of tea leaves, effervescent drinks or forming beverage exert an excellent foam-holding effect. This finding led to the completion of the present invention.

The foam-holding agent at the basis of the present invention allows a reduction of the amounts of additives and hop extract used as foam-producing materials and also imparts practical foam-producing and foam-holding properties to carbon dioxide-containing drinks at low cost. Moreover, the use of the foam-holding agent at the basis of the present invention not only enables a wider range of aromas, but also enables the production of carbon dioxide-containing drinks having a beer-like effervescence without using a fermented grain liquor.

Namely, the present invention is based on a foam-holding agent available for use in drinks, which has a sufficient foam-holding property and ensures the safety required for foods

The present invention provides a carbon dioxide-containing drink, which is excellent in refreshing quality and texture on the throat ("nodogoshi" or easiness to drink) imparted to effervescent drinks or forming beverage, which has a good foam-holding property, and which is also satisfactory with regard to safety, aroma and other properties required for foods.

The present invention further provides a carbon dioxide-containing drink, which has excellent foam-producing and foam-holding properties without using a fermented grain liquor as a source material.

The present invention enables the provision of carbon dioxide-containing drinks having a taste and atmosphere suggestive of beer, as judged by their appearance.

The present invention is defined by the claims and relates to the use of a water and/or ethanol extract of tea leaves for holding foam of a carbon dioxide -containing drink, wherein the drink comprises a foaming agent. The present invention also relates to a carbon dioxide-containing drink characterized by comprising (A) a foaming agent; (B) a water and/or ethanol extract of tea leaves; and (C) a hop extract.

The foam-holding agent used in the present invention is a tea leaf extract prepared by extracting catechin-rich components from tea leaves using a solvent such as water and/or ethanol in a standard manner.

The resulting extract may further be concentrated for use as a tea leaf extract.

In the present invention, tea leaves may be those of non-fermented tea, semi-fermented tea, fermented tea or the like. Examples include leaves of black tea, green tea, oolong tea, *Gynostemma pentaphyllum* tea, Mate tea, Pu-erh tea, barley tea, *coix lacryma-jobi var. ma-yuen* tea, brown rice tea and *Houttuynia cordata* tea, as well as leaves of other plants intended for drinking

A tea leaf extract used as the foam-holding agent at the basis of the present invention is preferably an extract of black tea, green tea or oolong tea in consideration of its influences and contributions as a foaming agent to stability of aroma and quality, as well as in consideration of availability costs.

A solvent used for extraction may be water alone or any mixture of water and ethanol, but it is preferable to use water alone or a mixture with water.

The ratio between tea leaves and a solvent during extraction is not limited in any way, but the solvent is preferably in 2- to 1000-fold excess (by weight) over tea leaves, particularly in 5- to 100-fold excess (by weight) over tea leaves in terms of handling and efficiency of extraction. The extraction temperature is conveniently set in the range of from room temperature to the boiling point of the solvent under normal pressure. The extraction time will vary depending on the extraction temperature, but it is preferably set in the range of from 10 minutes to 24 hours.

To concentrate the tea leaf extract thus prepared, the resulting extract may further be treated in a standard manner by heating under reduced pressure to remove water. Alternatively, this extract may be treated with a synthetic adsorbent. Examples of a synthetic adsorbent used for separation of tea leaf extract include aromatic synthetic adsorbents prepared by polymerizing styrene and divinylbenzene or methacrylate synthetic adsorbents prepared by polymerizing methacrylic acid. Commercially available products for aromatic synthetic adsorbents include Diaion HP20, Diaion HP21 (Mitsubishi Chemical Corporation), Amberlite XAD2 and Amberlite XAD4 (Rohm and Hass, USA), while commercially available products for methacrylate synthetic adsorbents include Diaion HP1MG, Diaion HP2MG (Mitsubishi Chemical Corporation), Amberlite XAD7 and Amberlite XAD8 (Rohm and Hass, USA).

Treatment with a synthetic adsorbent is preferably accomplished by filling the adsorbent into a column, passing a tea leaf extract through the column and then washing the resin with water. When a tea leaf extract is treated with such a synthetic adsorbent, the extract is preferably pre-treated for complete fractionation, e.g., by vacuum concentration or other techniques to remove organic solvent(s) in the extract or by sufficient dilution with water.

The extract used as a tea leaf extract preferably has a Brix degree of 10° to 40°, particularly 20° or more.

The tea leaf extract thus prepared or a concentrate thereof may be used directly or in any form, for example, as a highly concentrated syrup extract blended with saccharides or as a dried product obtained by removing the solvent from the tea leaf extract or a concentrate thereof. However, it is preferably dried in terms of shelf stability and safety of organic solvent(s).

Such a dried product may be prepared in a standard manner; for example, by freeze-drying the extract or a concentrate thereof, or by spray-drying the extract or a concentrate thereof after being included within a powdering substrate such as saccharides.

The present invention also provides carbon dioxide-containing drinks having foam-producing and foam-holding properties.

The carbon dioxide-containing drinks of the present invention may be alcoholic or non-alcoholic drinks. Examples include soda pops, lemon soda drinks, cola drinks, carbonated fruit drinks, low alcohol drinks [which have an alcohol content of 12% or less, exemplified by sours (Japanese cocktails), chu-hi drinks (Japanese distilled spirit-based drinks) and cocktails], and non-alcoholic beers.

In a case where the carbon dioxide-containing drinks of the present invention are alcoholic drinks, there is no particular limitation on the type of source liquor used to produce the drinks of the present invention. The source liquor may be a distilled liquor such as shochu (Japanese distilled spirit), whisky or other spirit, a fermented liquor such as sake, beer or wine, or a mixed liquor such as liqueur. The foam-holding agent of the present invention is preferred for use in non-effervescent distilled liquors or mixed liquors. The foam-holding agent is also preferred for use in products based on shochu or spirit because they provide potential for a wider range of aromas. According to the present invention, the foam-holding agent is also preferred for use in carbon dioxide-containing drinks having a taste and atmosphere suggestive of beer, as judged by their appearance. The foam-holding agent of the present invention is preferred for use in low alcohol drinks having an alcohol content of 12% or less, and particularly 6% or less.

In the present invention, the above tea leaf extract may be used in these drinks, either alone or in combination, as appropriate. The tea leaf extract may be added depending on the intended state of foam; for example, it is suitable to use the extract in an amount of 0.01% to 3% by weight, particularly preferably 0.02% to 1% by weight (calculated on the tea-derived soluble solid content) relative to a product (drink) to ensure a foam-producing property in terms of influences on cost efficiency and aroma, etc.

Any type of foaming agent may be used in the present invention as long as it has a foam-producing property. For example, it is possible to use an emulsifier which is used in foods for the purpose of emulsification, dispersion, penetration, washing, whipping, dissociation, etc. Examples of a foaming agent available for use in the present invention include plant- or animal-derived saponin extracts, as well as chemically synthesized glycerine fatty acid esters, propylene glycol fatty acid esters, sucrose fatty acid esters and sorbitan fatty acid esters.

Examples of saponin extracts include a *Quillaja saponaria* extract, *Sophora japonica* saponin, enzyme-treated lecithins, enzyme-digested lecithins, plant sterols, plant lecithins, sphingolipids, soybean saponin, bile powder, animal sterols, tomato glucolipids, fractionated lecithins, a Yucca foam extract, egg yolk lecithin, a barley husk extract, an enzyme-treated soybean saponin extract, tea seed saponin and beet saponin, any of which may be used as long as it has a foam-producing property. They may also be purified before use.

To obtain a *Quillaja saponaria* extract, the bark of *Quillaja saponaria* (a member of the Rosaceous family) may be extracted with water. The extraction may further be followed by purification using a porous adsorbent resin or the like to give a purified product.

To obtain *Sophora japonica* saponin, flowers and/or buds of *Sophora japonica* (a member of the Leguminous family) may be extracted with water or ethanol, and then purified.

To obtain enzyme-treated lecithins, lecithins may be treated with an enzyme.

To obtain enzyme-digested lecithins, lecithins may be digested with an enzyme.

To obtain plant sterols, oilseeds may be crushed and extracted with a solvent such as ethanol, followed by purification

Plant lecithins can be obtained by separation from fats and/or oils obtained from plant source materials such as oilseeds (e.g., soybean).

To obtain sphingolipids, rice bran or the like may be extracted with ethanol or an organic solvent, and then purified

To obtain soybean saponin, soybean (a member of the Leguminous family) may be crushed and extracted with water, ethanol or an organic solvent, followed by purification.

Bile powder can be obtained by powdering animal bile.

To obtain animal sterols, the unsaponifiable fraction of sheep's wool wax (lanolin) or fish oil may be hydrolyzed or extracted with an organic solvent, followed by purification.

To obtain tomato glucolipids, leaves or whole plants of tomato (a member of the Solanaceous family) may be extracted with an organic solvent and then purified.

To obtain fractionated lecithins, lecithins may be extracted with ethanol or an organic solvent, followed by fractionation and purification.

To obtain a Yucca foam extract, roots of Liliaceae plants such as *Yucca brevifolia* may be extracted with water.

To obtain egg yolk lecithin, hens' eggs may be extracted with polar and nonpolar solvents, followed by removal of water and the solvents from the extract.

Examples of glycerine fatty acid esters available for use include decaglycerine monolaurate and decaglycerine monooleate. Such glycerine fatty acid esters may be prepared by reaction of glycerine with a fatty acid or by reaction of a fat or oil with glycerine.

Examples of propylene glycol fatty acid esters available for use include propylene glycol alginate ester. Such propylene glycol fatty acid esters may be prepared by esterification of propylene glycol with a fatty acid. In the case of preparing propylene glycol alginate ester, propylene oxide and an alkaline catalyst may be added to alginic acid, followed by reaction at about 70°C under pressure.

To prepare sucrose fatty acid esters, sucrose may be dissolved in dimethylformamide, mixed with a fatty acid methyl ester, and then heated under reduced pressure in the presence of an alkaline catalyst to effect transesterification.

To prepare sorbitan fatty acid esters, sorbitol and a fatty acid may be heated and reacted in the presence of an alkaline catalyst.

To prepare calcium stearoyl lactate, lactic acid may be concentrated to give polymerized lactic acid, followed by treatment with calcium stearate.

These foaming agents may be used alone or in combination, as appropriate. Also, these foaming agents may be added as appropriate for the intended purpose and degree depending on criteria for use of additives; for example, it is preferable to use them in an amount of 0.001% to 2% by weight, particularly 0.002% to 1% by weight (calculated as an active ingredient) relative to a product.

The drinks of the present invention are further supplemented with a hop extract.

The hop is a climbing perennial plant belonging to the Moraceae family. Strobiles of this plant may be extracted with a solvent (e.g., carbon dioxide, water, ethanol) or further concentrated for use as a hop extract in the present invention. It is preferably used in an amount of 1 to 30 ppm (calculated as the concentration of a hop-derived component) relative to a product.

The drinks of the present invention contain carbon dioxide and are characterized by continuously providing a refreshing quality and a pleasant texture on the throat, not only at the beginning of drinking, but also over a period of time, because they have appropriate ranges of carbon dioxide-induced effervescence and foam-holding property. The drinks desirably contain carbon dioxide at an internal pressure ranging from 0.5 to 3.5 kg/cm² (at 20°C) per drink, preferably 1.2 to 2.2 kg/cm² (at 20°C) per drink. Carbon dioxide can be contained to give a desired concentration or a desired gas pressure in a standard manner by dilution with high-pressure soda water into which carbon dioxide has been previously dissolved, or by using a carbonator.

The drinks of the present invention may optionally be supplemented with various additives and/or source materials commonly used in drink production. For example, it is possible to use food additives (e.g., flavorings, acidulants), as well as source materials usually taken as foods (e.g., saccharides, fruit juices, dairy products). Specific examples include sugar, isomerized sugar, dextrin, citric acid, lemon juice, grapefruit juice, orange juice, fermented milk, cow milk and concentrated milk.

These additives and source materials may be added as appropriate depending on the types of drinks. For example, sugars are preferably added in an amount of about 0% to 15% by weight per drink, flavorings are preferably added in an amount of about 0% to 2% by weight per drink, and acidulants are preferably added in an amount of about 0% to 2% by weight per drink.

The foam-holding agent at the basis of the present invention can be used to produce effervescent drinks or forming beverage which have excellent foam-producing and foam-holding properties and also provide dense and smooth-textured foam when compared to conventional effervescent drinks or foaming beverage

### EXAMPLES

The present invention will be further described in more detail in the following examples.

### Example 1: Preparation of black tea extract

Black tea leaves were extracted with boiling water and concentrated under reduced pressure to give a concentrate having a Brix degree of 24° to 26°, which was then mixed with sugar to prepare a black tea leaf extract having a Brix degree of 62° (containing 12% by weight of solid extract derived from black tea leaves).

### Example 2: Test for foam-producing and foam-holding properties

### 1. Sample preparation

White sugar was added to 90 ml grain spirit (alcohol content: 59%) to give a Brix degree of 4.5 ± 0.1, to which citric acid and malic acid were further added to prepare a solution having a solid content of 0.2%.

Eight samples shown in Table 1 (Samples 1 to 8) were prepared by supplementing the above solution with the black tea extract obtained in Example 1 (the same applying hereinafter), a hop extract (HASS HOP PRODUCTION, INC) or a *Quillaja saponaria* extract (Maruzen Pharmaceuticals Co., Ltd.), either alone or in combination.

The resulting samples were each diluted with high-pressure soda water, into which carbon dioxide had been dissolved, to adjust the alcohol content to 5.3% and the internal carbon dioxide pressure to 2.2 ± 0.2 kg/cm² (at 20°C), followed by filling into a 350 ml can for use in the following test.

### 2. Test for foam-producing and foam-holding properties

The whole volume of each sample prepared above was poured over a given period of time (10 seconds) into a funnel fixed on the top of a measuring cylinder. The total volume (ml) (sum of liquid and foam fractions) was measured immediately after completion of pouring and then monitored over time (at 0.5, 1, 2, 3, 4, 5 and 10 minutes).

The experimental samples and experimental glassware were allowed to stand overnight in a thermostatic chamber set at 20°C, and the experiment was also performed at 20°C. Table 1 shows the results obtained

**Table 1**

| Sample | Black tea extract-derived soluble solid content (0.5 g/L) | Hop-derived component concentration (0.005 ml/L) | *Quillaja saponaria-*derived component concentration (0.035 ml/L) | 0 min | 0.5 min | 1 min | 2 min | 3 min | 4 min | 5 min | 10 min |
|---|---|---|---|---|---|---|---|---|---|---|---|
| 1 | Yes | Yes | Yes | 880 | 820 | 800 | 750 | 710 | 680 | 640 | 520 |
| 2 | Yes | Yes | No | 740 | 600 | 540 | 360 | 350 | | | |
| 3 | Yes | No | Yes | 850 | 820 | 810 | 770 | 740 | 710 | 690 | 570 |
| 4 | No | Yes | Yes | 870 | 830 | 810 | 770 | 720 | 680 | 630 | 470 |
| 5 | Yes | No | No | 740 | 500 | 360 | 350 | | | | |
| 6 | No | Yes | No | 680 | 350 | | | | | | |
| 7 | No | No | Yes | 860 | 830 | 810 | 780 | 730 | 710 | 680 | 520 |
| 8 | No | No | No | 680 | 350 | | | | | | |

As shown in Table 1, Sample 3, containing both the *Quillaja saponaria* extract and the tea leaf extract, was confirmed to have an improved foam-holding property when compared to Sample 7 containing the *Quillaja saponaria* extract alone.

Moreover, the result of Sample 1 indicated that the sample containing the tea leaf extract was excellent in effervescence and foam-holding property even when further supplemented with the hop extract.

The above results indicated that the tea leaf extract provided an excellent foam-holding property.

### Example 3: Test for foam density

Each sample prepared in Example 2 was filled into a 120 ml small glass bottle and provided for use in this test.

Each sample (120 ml) was first cooled in a thermobath set at 10°C. Next, a funnel was placed on a transparency meter and the whole volume of each cooled sample was poured over 5 seconds. After 30 seconds, a cock of the transparency meter was opened to remove only the liquid fraction from the bottom, and the remaining foam fraction was measured for its height (cm). Ethanol (95%, about 500 µl) was then poured into the transparency meter for the purpose of defoaming, and the resulting liquid was measured for its height (cm).

The following equation was used to calculate a foam density value.

Foam density ratio = liquid height after defoaming (cm)/foam fraction height (cm)

Table 2 shows the results obtained.

**Table 2**

| Sample | Black tea extract | Hop extract | *Quillaja saponaria* extract | Foam fraction height (cm) | Liquid height after defoaming (cm) | Foam density ratio |
|---|---|---|---|---|---|---|
| 1 | Yes | Yes | Yes | 30.5 | 10.4 | 0.34 |
| 2 | Yes | Yes | No | 26 | 8 | 0.31 |
| 3 | Yes | No | Yes | 32.5 | 10 | .0.31 |
| 4 | No | Yes | Yes | 30 | 9.5 | 0.32 |
| 5 | Yes | No | No | | | |
| 6 | No | Yes | No | | | |
| 7 | No | No | Yes | 31 | 8 | 0.26 |
| 8 | No | No | No | | | |

| | | | | | | |
|---|---|---|---|---|---|---|
| (Samples 5, 6 and 8 were excluded from comparison because of the results indicating that their foam-producing and foam-holding properties were not effective.) | | | | | | |

As shown in Table 2, the foam density was higher in Sample 3 containing both the *Quillaja saponaria* extract and the black tea extract when compared to Sample 7 containing the *Quillaja saponaria* extract alone.

It was also indicated that, when compared to Sample 4, the foam density was higher in Sample 1 which was further supplemented with the black tea extract.

The above results indicated that the tea leaf extract provided thick and smooth-textured foam.

### Example 4: Sensory test

The eight samples prepared in Example 2 were tested while cooling to about 5°C to 10°C.

Three panelists specializing in aroma evaluated and scored the samples for their effervescent quality in the mouth and their texture on the throat on a scale of up to 5 points. The scores given by these three panelists were summed for each sample (maximum 15 points) and used to determine the superiority. The evaluation was conducted in an objective manner by hiding the ingredient composition of each sample. Table 3 shows the results obtained.

**Table 3**

| Sample | Black tea extract | Hop extract | *Quillaja saponaria* extract | | | | Total score in sensory test |
|---|---|---|---|---|---|---|---|
| 1 | Yes | Yes | Yes | 4 | 4.3 | 4.5 | 12.8 |
| 2 | Yes | Yes | No | 3.7 | 4 | 4.5 | 12.2 |
| 6 | No | Yes | No | 3 | 3.9 | 3.5 | 10.4 |
| 4 | No | Yes | Yes | 2.4 | 3.5 | 4 | 9.9 |
| 3 | Yes | No | Yes | 3.5 | 3 | 3 | 9.5 |
| 5 | Yes | No | No | 2.8 | 3.7 | 3 | 9.5 |
| 7 | No | No | Yes | 2.2 | 4 | 3 | 9.2 |
| 8 | No | No | No | 2 | 3 | 2 | 7 |

The samples containing the black tea extract were confirmed to be superior in sensory aspects because such samples had a fine and pleasant effervescence in the mouth and provided a better texture on the throat.

In particular, it was indicated that the combined use with the hop extract was particularly effective.

### Example 5: (Chu-hi drink)

A solution was prepared in the following ratio and diluted to a desired volume with high-pressure soda water to make a chu-hi drink. The internal carbon dioxide pressure was adjusted to 2.2 kg/cm².

| | | |
|---|---|---|
| Sugar | 30 g | |
| Citric acid | 1.5 g | |
| Grain spirit (alcohol 59%). | 90 ml | |
| *Quillaja saponaria* extract (Maruzen Pharmaceuticals co., Ltd.) | 0.03 ml | (calculated as a *Quillaja saponaria-*derived component) |
| Black tea extract (Example 1) | 3.5 g | (soluble solid content: 0.42 g) |
| Flavorings | 2 ml | |
| Total | 1000 ml | |

### Example 6: (Chu-hi drink)

A solution was prepared in the following ratio and diluted to a desired volume with high-pressure soda water to make a chu-hi drink. The internal carbon dioxide pressure was adjusted to 2.2 kg/cm².

| | | |
|---|---|---|
| Sugar | 30 g | |
| Dextrin | 10 g | |
| Citric acid | 1.5 g | |
| Grain spirit (alcohol 59%) | 90 ml | |
| *Quillaja saponaria* extract (Maruzen Pharmaceuticals) | 0.03 ml | (calculated as a *Quillaja saponaria*-derived component) |
| Black tea extract (Example 1) | 3.5 g | (soluble solid content: 0.42 g) |
| Hop extract | 0.003 ml | (calculated as a hop-derived component) |
| Flavorings | 2 ml | |
| Total | 1000 ml | |

### Example 7: (Carbonated fruit drink)

A solution was prepared in the following ratio and diluted to a desired volume with high-pressure soda water to make a carbonated fruit drink. The internal carbon dioxide pressure was adjusted to 2.2 kg/cm².

| | | |
|---|---|---|
| Sugar | 80 g | |
| Citric acid | 2 g | |
| Grapefruit Juice (5-fold concentrated) | 10 g | |
| *Quillaja saponaria* extract (Maruzen Pharmaceuticals) | 0.03 ml | (calculated as a *Quillaja saponaria-*derived component) |
| Black tea extract (Example 1) | 3 g | (soluble solid content: 0.36 g) |
| Flavorings | 2 ml | |
| Total | 1000 ml | |

### Example 8: (Non-alcoholic beer)

A solution was prepared in the following ratio and diluted to a desired volume with high-pressure soda water to make a non-alcoholic beer. The internal carbon dioxide pressure was adjusted to 2.2 kg/cm²

| | | |
|---|---|---|
| Fructose/glucose liquid sugar | 5 g | |
| Dextrin | 20 g | |
| Malt extract (San-Ei Gen P.P.I., Inc.) | 5 g | |
| Citric acid | 0.01 g | |
| Lactic acid | 0.4 g | |
| *Quillaja saponaria* extract (Maruzen Pharmaceuticals) | 0.03 ml | |
| Black tea extract (Example 1) | 1.0 g | (soluble solid content: 0.12 g) |
| Hop extract | 0.03 ml | |
| Flavorings | 2 ml | |
| Total | 1000 ml | |

All of the drinks prepared in Examples 5 to 8 were found to have a sufficient foam-holding property and to be satisfactory with regard to safety, taste, aroma and other properties required for foods.

## Claims

1. A carbon dioxide-containing drink comprising:
(A) a foaming agent;
(B) a water and/or ethanol extract of tea leaves ;and
(C) a hop extract.

2. The drink according to claim 1, wherein the tea leaves are those of black tea, green tea or oolong tea.

3. The drink according to claim 1 or 2, wherein the internal pressure of carbon dioxide is 0.5 to 3.5 kg/cm² (at 20°C).

4. The drink according to any one of claims 1 to 3, wherein a fermented grain liquor is not used as a source material.

5. The drink according to any one of claims 1 to 4, which is a low alcohol drink having an alcohol content of 12% or less.

6. Use of a water and/or ethanol extract of tea leaves for holding foam of a carbon dioxide-containing drink, wherein the drink comprises a foaming agent.

7. A method for producing a carbon dioxide-containing drink, which comprises preparing a drink blended with a foaming agent and a water and/or ethanol extract of tea leaves, and incorporating carbon dioxide into the resulting drink.

## Patentansprüche

1. Kohlendioxid enthaltendes Getränk, umfassend:
(A) einen Schaumbildner;
(B) einen Wasser- und/oder Ethanolextrakt aus Teeblättern; und
(C) einen Hopfenextrakt.

2. Getränk gemäß Anspruch 1, wobei die Teeblätter vom Schwarztee, grünen Tee oder Oolong-Tee sind.

3. Getränk gemäß Anspruch 1 oder 2, wobei der innere Druck des Kohlendioxids 0,5 bis 3,5 kg/cm² (bei 20°C) liegt.

4. Getränk gemäß einem der Ansprüche 1 bis 3, wobei kein alkoholisches Getränk aus fermentiertem Getreide als ein Ausgangsmaterial verwendet wird.

5. Getränk gemäß einem der Ansprüche 1 bis 4, welches ein Getränk mit wenig Alkohol mit einem Alkoholgehalt von 12 % oder weniger ist.

6. Verwendung eines Wasser- und/oder Ethanolextrakts aus Teeblättern zum Halten des Schaums eines Kohlendioxid enthaltenden Getränks, wobei das Getränk einen Schaumbildner umfasst.

7. Verfahren zur Herstellung eines Kohlendioxid enthaltenden Getränks, welches das Herstellen eines Getränks, welches mit einem Schaumbildner und einem Wasser- und/oder Ethanolextrakt aus Teeblättern gemischt ist, und das Einbringen von Kohlendioxid in das erhaltene Getränk umfasst.

## Revendications

1. Boisson contenant du dioxyde de carbone comprenant:
(A) un agent de tenue de mousse;
(B) un extrait aqueux et/ou éthanolique de feuilles de thé ; et
(C) un extrait de houblon.

2. Boisson selon la revendication 1, dans laquelle les feuilles de thé sont des feuilles de thé noir, de thé vert ou de thé oolong.

3. Boisson selon les revendications 1 ou 2, dans laquelle la pression interne en dioxyde de carbone est de 0,5 à 3,5 kg/cm² (à 20°C).

4. Boisson selon l'une quelconque des revendications 1 à 3, dans laquelle une liqueur de grain fermenté n'est pas utilisée en tant que matériau de départ.

5. Boisson selon l'une quelconque des revendications 1 à 4, qui est une boisson faiblement alcoolisée possédant une teneur en alcool de 12% ou moins.

6. Utilisation d'un extrait aqueux et/ou éthanolique de feuilles de thé pour la tenue de mousse d'une boisson contenant du dioxyde de carbone, dans laquelle la boisson comprend un agent de tenue de mousse.

7. Procédé de production d'une boisson contenant du dioxyde de carbone, qui comprend la préparation d'une boisson assemblée avec un agent de tenue de mousse et un extrait aqueux et/ou éthanolique de feuilles de thé, et l'incorporation de dioxyde de carbone dans la boisson résultante.
